# EUROPÄISCHE PATENTSCHRIFT

(11) **EP 3 548 306 B1**
(45) Veröffentlichungstag und Bekanntmachung des Hinweises auf die Patenterteilung: **08.11.2023**
(21) Anmeldenummer: 17781043.9
(22) Anmeldetag: 28.09.2017
(51) Int. Cl.: B60C 1/00, C08K 3/36, C08K 3/04, B60C 7/00, C08J 5/10

(54) **VOLLGUMMIREIFEN**
SOLID RUBBER TIRE
BANDAGE EN CAOUTCHOUC PLEIN

(30) Priorität: 29.11.2016 DE 102016223591
(43) Veröffentlichungstag der Anmeldung: 09.10.2019
(73) Patentinhaber: Continental Reifen Deutschland GmbH, 30165 Hannover (DE)
(72) Erfinder: MÜLLER, Matthias-Stephan, 30827 Garbsen (DE); EFIMOV, Konstantin, 30453 Hannover (DE); NAIK, Shreyas, 30173 Hannover (DE); MINX, Carsten, 31535 Neustadt (DE); HALLMANN, Steffen, 30171 Hannover (DE); HEINRICH, Nikolas, 30165 Hannover (DE)
(74) Vertreter: Continental Corporation
(86) Internationale Anmeldenummer: PCT/EP2017/074570
(87) Internationale Veröffentlichungsnummer: WO 2018/099629

(56) Entgegenhaltungen:
- EP-A1- 3 196 049
- WO-A1-2014/163478
- WO-A1-2016/016869
- Anonymous: "Ruß - Wikipedia", , 24. November 2017 (2017-11-24), XP055438093, Gefunden im Internet: URL:https://de.wikipedia.org/wiki/Ruß [gefunden am 2018-01-04]
- Layman: "Eco-Innovation Project Carbon Black Green Tyre Contents", , 31. Januar 2016 (2016-01-31), XP055438097, Gefunden im Internet: URL:https://blackbearcarbon.com/ecoinnovat ion/wp-content/uploads/sites/2/2016/01/D7. 4-Laymans-report.pdf [gefunden am 2018-01-04]

## Beschreibung

Die Erfindung betrifft einen Vollgummireifen.

Vollgummireifen sind aus dem Stand der Technik bekannt. Hierbei ist im Gegensatz zu Luftreifen wenigstens eine Kautschukmischung derart ausgeführt, dass sie ohne einen vorgesehenen Luftzwischenraum auf einen Träger, wie eine Felge oder einen Grundkörper mit Kugellager, aufgebracht werden kann.

Vollgummireifen werden insbesondere bei Fahrzeugen wie Gabelstaplern eingesetzt, die zum Transportieren von Lasten vorgesehen sind. Die Vollgummireifen sind meist für einen Betrieb bei geringen Fahrgeschwindigkeiten ausgelegt und werden vor allem über vergleichsweise kurze Strecken verwendet. Ein Vollgummireifen weist üblicherweise einen Bodenverbund auf, welcher mit einer Felge oder einem Grundkörper mit Kugellagern, auf die der Reifen montierbar ist, in Kontakt tritt
Der Bodenverbund weist eine meist harte Kautschukmischung auf. Zudem sind in den Bodenverbund meist mehrere in Umfangsrichtung umlaufende zugfeste Festigkeitsträgerlagen, zumeist Stahlkordkerne einvulkanisiert. Radial oberhalb des Bodenverbundes ist oft eine aus einer weichen Kautschukmischung bestehende Dämpferschicht angeordnet, radial oberhalb der Dämpferschicht ist das Laufflächenteil angeordnet, welches aus einer laufflächentypischen Kautschukmischung besteht und an seinen beim Abrollen mit dem Untergrund in Kontakt kommenden Bereichen mit einer Profilierung versehen sein kann.

Ein möglicher Aufbau eines Vollgummireifens ist beispielsweise in der DE 102007055036 A1 beschrieben.

WO 2016/016869 A1 betrifft Kautschukmischungen umfassend unter anderem Pyrolyseruß.

WO 2014/163478 A1 betrifft Kautschukmischungen für Vollgummireifen, wobei die Mischungen unter anderem Ruß enthalten.

Vollgummireifen bieten gute Stabilitätseigenschaften und müssen einen bestimmten Fahrkomfort bieten, da die Fahrzeuge nicht über ein gefedertes und gedämpftes Fahrwerk verfügen. Zudem sind die Herstellungskosten des Reifens durch den hohen Materialeinsatz und durch eine zeitintensive Vulkanisation des Reifenrohlings in der Heizpresse zum fahrbereiten Reifen hoch.

In den Kautschukmischungen der Vollgummireifen aus dem Stand der Technik ist als Hauptfüllstoff Industrieruß enthalten, um die erforderliche Festigkeit im Hinblick auf die Anforderungen an einen Vollgummireifen sicherzustellen. Industrieruße weisen jedoch einen hohen Anteil an polyzyklischen aromatischen Kohlenwasserstoffen (PAK) auf. Polyzyklische aromatische Kohlenwasserstoffe sind gesundheitsschädlich. In der GS-Spezifikation - Spezifikation gemäß § 21 Abs. 1 Nr. 3 ProdSG - sind bspw. einzuhaltende PAK-Höchstgehalte für Materialien von relevanten Kontakt-/Griff- und Betätigungsflächen kategorisiert.

Der vorliegenden Erfindung liegt die Aufgabe zugrunde, einen Vollgummireifen bereitzustellen, der im Vergleich zum Stand der Technik weniger gesundheitsschädlich ist bzw. dessen Bauteile möglichst wenig bis gar keine PAK-haltigen Substanzen aufweisen.

Gelöst wird die Aufgabe erfindungsgemäß dadurch, dass der Vollgummireifen in wenigstens einem Bauteil 1 bis 200 phr wenigstens eines Pyrolyse-Rußes aufweist.

Überraschenderweise kann in Vollgummireifen Pyrolyse-Ruß statt "herkömmlichen" Industrierußen eingesetzt werden, ohne dass sich die Eigenschaften, insbesondere das Rollwiderstandsverhalten des Vollgummireifens, verschlechtern.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Pyrolyse-Ruß ist dem Fachmann bekannt. Er wird wie beispielsweise in "Rubber Chemistry and Technology", Vol. 85, Nr. 3, Seiten 408 bis 449 (2012), insbesondere auf den Seiten 438 und 440 und 442, beschrieben, durch thermische Zersetzung von organischen Materialien bei 550 bis 800 °C unter Ausschluss von Sauerstoff oder mittels Vakuumpyrolyse bei vergleichsweise niedrigen Temperaturen im Bereich von 500 °C erhalten.

Im Rahmen der vorliegenden Erfindung handelt es sich bei den organischen Materialien bevorzugt um Altreifen und/oder vulkanisierten Produktionsabfällen aus der Reifenherstellung und/oder vulkanisierten Schläuchen, d. h. anfallende Abfallprodukte, die entsorgt werden müssen. Die Pyrolyse und Gewinnung von Pyrolyse-Ruß daraus, der erfindungsgemäß wieder Reifenmischungen zugesetzt wird, stellt somit einen Recyclingprozess dar.

Ein derartiger Pyrolyse-Ruß unterscheidet sich von bekannten Rußen, wie Industrierußen, insbesondere den ASTM-Rußen wie N660, u.a. im höheren Aschegehalt und gleichzeitig geringerem Gehalt an polyzyklischen aromatischen Kohlenwasserstoffen (PAK), wie beispielsweise der Homepage der Firma BlackBear Carbon BV zu entnehmen ist, http://www.blackbearcarbon.com/rfp-international/.

Ein wesentlicher Vorteil der vorliegenden Erfindung ist somit, dass Pyrolyse-Ruß eine gesundheits- und umweltfreundliche Alternative zu Industrierußen ist.

Der Pyrolyse-Ruß ist bevorzugt mittels Pyrolyse aus Altreifen und/oder vulkanisierten Produktionsabfällen aus der Reifenherstellung und/oder vulkanisierten Schläuchen hergestellt.

Besonders bevorzugt wurde der Pyrolyseruß aus Altreifen und/oder Schläuchen hergestellt, ganz besonders bevorzugt aus Altreifen.

Bei vulkanisierten Produktionsabfällen aus der Reifenherstellung kann es sich um alle denkbaren vulkanisierten Kautschukmischungen für Fahrzeugreifen handeln, die Kautschukmischungen im Verbund mit Festigkeitsträgern einschließen.

Im Rahmen der vorliegenden Erfindung wird unter dem Ausdruck "Pyrolyse-Ruß, der mittels Pyrolyse aus Altreifen und/oder vulkanisierten Produktionsabfällen aus der Reifenherstellung und/oder vulkanisierten Schläuchen hergestellt wurde" alle dem Fachmann bekannten Pyrolyse-Ruße aus Altreifen und/oder vulkanisierten Produktionsabfällen aus der Reifenherstellung und/oder vulkanisierten Schläuchen verstanden, wobei die aufgeführten Ausführungsformen bevorzugt sind.

Ein geeigneter Pyrolyse-Ruß kann beispielsweise von der Fa. BBC unter dem Handelsnamen BBC500 oder von der Fa. Pyrolyx AG unter dem Handelsnamen CB e 603 erhalten werden.

Im Rahmen der vorliegenden Erfindung wird unter dem Begriff "Industrieruße" die für Reifenmischungen bekannten Ruße, die keine Pyrolyse-Ruße sind, verstanden, die gemäß Römpp-Online-Lexikon ^{©} 2016 Georg Thieme Verlag KG (Stand 08.01.2016) üblicherweise einen Aschegehalt von weniger als 1 Gew.-% aufweisen und insbesondere sogenannte Furnace-Ruße, Gasruße oder Flammruße sind.

Der erfindungsgemäß enthaltene Pyrolyse-Ruß weist einen Aschegehalt von 5 bis 30 Gew.-%, besonders bevorzugt 10 bis 30 Gew.-%, ganz besonders bevorzugt 10 bis 20 Gew.-%, auf. Gemäß einer bevorzugten Ausführungsform der Erfindung beträgt der Aschegehalt 15 bis 20 Gew.-%.

Der Aschegehalt bezieht sich nur auf den Pyrolyse-Ruß und wird mittels thermogravimetrischer Analyse (TGA) gemäß ASTM D1506 des Pyrolyse-Rußes bestimmt.

Mit einem derartigen Aschegehalt wird insbesondere die Aufgabe gelöst, dass die Eigenschaften wie insbesondere das Rollwiderstandsverhalten des erfindungsgemäßen Vollgummireifens nicht verschlechtert werden und gleichzeitig eine umwelt- und gesundheitsfreundliche Alternative bereitgestellt wird.

Der erfindungsgemäß enthaltene Pyrolyse-Ruß weist ferner bevorzugt einen SchwefelGehalt von größer als 1 Gew.-%, besonders bevorzugt größer als 2 Gew.-%, ganz besonders bevorzugt 2 bis 6 Gew.-%, wiederum ganz besonders bevorzugt 2 bis 4 Gew.-%, und wiederum ganz besonders bevorzugt 2,2 bis 4 Gew.-%, auf.

Mit einem derartigen Schwefelgehalt wird insbesondere die Aufgabe gelöst, dass die Eigenschaften wie insbesondere das Rollwiderstandsverhalten des erfindungsgemäßen Vollgummireifens nicht verschlechtert werden und gleichzeitig eine umwelt- und gesundheitsfreundliche Alternative bereitgestellt wird.

Der Schwefelgehalt bezieht sich nur auf den Pyrolyse-Ruß und wird mittels ASTM D4239 des Pyrolyse-Rußes bestimmt.

Der erfindungsgemäß enthaltene Pyrolyse-Ruß weist ferner bevorzugt einen Kohlenstoffgehalt von 64 bis 87 Gew.-%, besonders bevorzugt 74 bis 87 Gew.-%, ganz besonders bevorzugt 78 bis 87 Gew.-%, auf.

Dem Fachmann ist bekannt, dass sich die Gewichtsanteile von Pyrolyse-Ruß aus enthaltener Asche, Schwefel und überwiegend (> 50 Gew.-%) Kohlenstoff zusammensetzen.

Der erfindungsgemäß enthaltene Pyrolyse-Ruß weist bevorzugt eine Jodadsorptionszahl gemäß ASTM D 1510 von 100 bis 130 g/kg und eine DBP-Zahl gemäß ASTM D 2414 von 50 bis 100 ml/100g, besonders bevorzugt 75 bis 95 ml/100g auf.

Bei dem erfindungsgemäßen Vollgummireifen kann es sich um jede dem Fachmann bekannte Art von Vollgummireifen handeln. Unter Vollgummireifen wird daher im Rahmen der vorliegenden Erfindung jeder Reifen verstanden, der wenigstens eine Kautschukmischung aufweist, die ohne einen vorgesehenen Luftzwischenraum auf einen Träger, wie eine Felge oder einen Grundkörper mit Kugellager, aufgebracht werden kann. Der erfindungsgemäße Vollgummireifen kann daher auf eine Felge aufgebracht werden, wodurch ein Rad oder eine Rolle ohne Kugellager ausgebildet wird. Ein weiterer Gegenstand der vorliegenden Erfindung ist somit ein Rad oder eine Rolle, welche eine Felge und den erfindungsgemäßen Vollgummireifen umfassen.

Der erfindungsgemäße Vollgummireifen kann auch auf einen Grundkörper mit Kugellager aufgebracht werden, wodurch eine Rolle mit Kugellager ausgebildet wird.

Ein weiterer Gegenstand der vorliegenden Erfindung ist somit eine Rolle, welche einen Grundkörper mit Kugellager und den erfindungsgemäßen Vollgummireifen umfasst.

Die Aufbringung des Vollgummireifens auf eine Felge oder einen Grundkörper mit Kugellager kann dabei auf jede dem Fachmann bekannte Weise erfolgen, wie insbesondere durch Aufvulkanisieren oder Aufpressen oder Einklemmen.

Die Felge oder der Grundkörper mit Kugellager können dabei auf jede dem Fachmann bekannte Weise ausgeführt sein, wobei auch eine asymmetrische Felge denkbar ist. Die Felge kann wenigstens eine Rille aufweisen, in die der Reifenwulst eingeklemmt bzw. eingeschnappt wird ("snap-in tire").

Vollgummireifen werden insbesondere in Rädern oder Rollen bei Flurförderfahrzeugen wie Gabelstaplern, oder Schwerlastanwendungen wie Kofferbeförderungswagen am Flughafen, eingesetzt, die zum Transportieren von Lasten vorgesehen sind. Ferner gibt es Anwendungen, in denen Vollgummireifen antriebsrelevant sind und daher gewissen Anforderungen hinsichtlich Abrieb und Griffeigenschaften genügen müssen.

Der erfindungsgemäße Vollgummireifen umfasst wenigstens einen Laufstreifen. Dieser kann gemäß einer Ausführungsform der Erfindung derart gestaltet sein, dass er direkt auf eine Felge aufvulkanisiert werden kann, in diesem Fall kann der Vollgummireifen aus dem Laufstreifen bestehen.

Der erfindungsgemäße Vollgummireifen kann auch dergestalt sein, dass er direkt auf einen Grundkörper mit Kugellager aufgebracht werden kann und somit ein Vollgummireifen für eine Rolle sein.

Gemäß einer weiteren Ausführungsform der Erfindung kann der Vollgummireifen noch weitere Schichten bzw. Bauteile, insbesondere Festigkeitsträger, umfassen, die in den unten stehenden Ausführungen erläutert werden, jedoch nicht auf diese beschränkt sind. Der Vollgummireifen kann optional Seitenwände aufweisen, dies ist aber nicht zwingend erforderlich. Bevorzugt weist er Seitenwände auf.

Für den Fall, dass der Vollgummireifen Seitenwände aufweist, beträgt deren axiale Breite bevorzugt jeweils (pro Seite) maximal bis zu 15 % der gesamten axialen Breite des Vollgummireifens.

Unter "Laufstreifen" ist eine Kautschukmischung zu verstehen, die in Umlaufrichtung des Reifens derart angeordnet ist, dass sie in axialer Breite des Reifens an wenigstens einer Stelle in Kontakt mit dem Untergrund tritt.

Der Laufstreifen von Vollgummireifen muss den Anforderungen hinsichtlich des Abriebes der Kautschukmischung gerecht werden.

Gemäß einer bevorzugten Ausführungsform der Erfindung weist der Vollgummireifen hierzu 1 bis 40 phr, besonders bevorzugt 1 bis 20 phr, wenigstens eines Pyrolyse-Rußes in der Kautschukmischung des Laufstreifens auf. Hierbei ist es weiter bevorzugt, dass die Kautschukmischung des Laufstreifens maximal 5 phr, besonders bevorzugt maximal 3 phr, ganz besonders bevorzugt maximal 1 phr, Industrieruß(e) und bevorzugt 1 bis 200 phr, besonders bevorzugt 30 bis 200 phr, wenigstens einer Kieselsäure enthält.

Der Anteil an enthaltenen Industrieruß(en) ist somit bevorzugt sehr gering. Diese maximale Obergrenze hat den Vorteil, dass der Anteil an PAK in der Kautschukmischung möglichst gering ist. Gleichzeitig kann aber herstellbedingt nicht ausgeschlossen werden, dass z. B. über die Innenwand des Mischers, in dem die Kautschukmischung gemischt wird, geringe Mengen an Industrierußen in die Mischung gelangen.

Gemäß einer besonders bevorzugten Ausführungsform der Erfindung beträgt die Menge an Industrieruß(en) jedoch 0 bis 1 phr, ganz besonders bevorzugt 0 bis 0,1 phr, wiederum bevorzugt idealerweise 0 phr. Somit ist die Kautschukmischung des Laufstreifens des Vollgummireifens bevorzugt frei von Industrierußen.

Als verstärkender Füllstoff sind wie oben aufgeführt besonders bevorzugt 30 bis 200 phr wenigstens einer Kieselsäure im Laufstreifen enthalten, insbesondere um eine ausreichende Abriebresistenz bei guten Rollwiderstandseigenschaften bereitzustellen. Ganz besonders bevorzugt beträgt die Kieselsäuremenge 30 bis 150 phr, wiederum bevorzugt 30 bis 100 phr und gemäß einer besonders vorteilhaften Weiterbildung der Erfindung 30 bis 70 phr.

Insbesondere mit einer Kieselsäuremenge von 40 bis 60 phr und einer Menge an Pyrolyse-Ruß von 1 bis 10 phr und einer Menge von Industrieruß von 0 bis 0,1 phr im Laufstreifen weist der Vollgummireifen einen besonders geringen Rollwiderstand, ein gutes Abriebverhalten sowie insbesondere eine gesundheits- und umweltfreundliche Kautschukmischung auf.

Gemäß einer bevorzugten Ausführungsform der Erfindung umfasst der erfindungsgemäße Vollgummireifen Festigkeitsträger. Unter Festigkeitsträger werden im Rahmen der vorliegenden Erfindung metallische oder kunststoffbasierte Gebilde verstanden, die einem Reifen zusätzliche Festigkeit verleihen. Im Rahmen der vorliegenden Erfindung sind alle denkbaren Formen und Arten von Festigkeitsträgern umfasst. Metallische Festigkeitsträger sind oft aus Stahl gefertigt und meist in Form von in Umfangsrichtung umlaufenden zugfesten Festigkeitsträgerlagen angeordnet. Gemäß einer Ausführung kann es sich bei den Festigkeitsträgern um Stahlkordkerne handeln. Ferner kann der metallische Festigkeitsträger in Form einer Stahlbodenbandage ausgeführt sein.

Je nach Ausgestaltung der Festigkeitsträger ergibt sich ggf. ein anderes Anwendungsprofil des Vollgummireifens.

Bei kunststoffbasierten Festigkeitsträgern kann es sich beispielsweise um Nylon (PA 6.6.) basierte Gebilde handeln, die beispielsweise in Rollen zum Einsatz kommen.

Der erfindungsgemäße Vollgummireifen umfasst gemäß einer bevorzugten Ausführungsform wenigstens einen Bodenverbund umfassend wenigstens eine Kautschukmischung und Festigkeitsträger. Hierbei weist der erfindungsgemäße Vollgummireifen in der Kautschukmischung wenigstens eines Bauteils 1 bis 200 phr wenigstens eines Pyrolyse-Rußes auf.

Der Bodenverbund ist ebenfalls in Umlaufrichtung angeordnet, wobei seine axiale Breite je nach Reifentyp in radialer Richtung variieren kann und u. a. durch die Felgengeometrie oder die Geometrie des Grundkörpers des jeweiligen Rades oder der Rolle vorgegeben wird. Der Bodenverbund verläuft bevorzugt im Wesentlichen parallel zum Laufstreifen und ist dabei radial innen angeordnet und beim Rad oder der Rolle auf dem Träger, wie der Felge oder dem Grundkörper mit Kugellager, auf dem Fachmann bekannte Weise befestigt.

Der erfindungsgemäße Vollgummireifen weist 1 bis 200 phr wenigstens eines Pyrolyse-Rußes wenigstens im Laufstreifen und/oder wenigstens in einer Kautschukmischung des Bodenverbundes und/oder wenigstens einem anderen Bauteil auf.

Gemäß einer vorteilhaften Ausführungsform enthält der erfindungsgemäße Vollgummireifen in wenigstens einer Kautschukmischung des Bodenverbundes 20 bis 200 phr, besonders bevorzugt 20 bis 100 phr, ganz besonders bevorzugt 30 bis 100 phr, wiederum bevorzugt 30 bis 70 phr, wenigstens eines Pyrolyse-Rußes. Bevorzugt wird dabei so viel wie möglich des im Stand der Technik enthaltenen Industrierußes unter gleichbleibenden Eigenschaften durch Pyrolyse-Ruße ersetzt. Besonders bevorzugt ist hierbei, dass die wenigstens eine Kautschukmischung des Bodenverbundes maximal bis zu 60 phr, wiederum bevorzugt maximal bis zu 50 phr wenigstens eines Industrierußes enthält.

In einer weiteren Ausführungsform kann der Industrieruß auch durch Kieselsäure ersetzt werden, sodass die wenigstens eine Kautschukmischung des Bodenverbundes dann 20 bis 200 phr, besonders bevorzugt 20 bis 100 phr, ganz besonders bevorzugt 30 bis 100 phr, wiederum bevorzugt 30 bis 70 phr, wenigstens eines Pyrolyse-Rußes in Kombination mit 10 bis 200 phr wenigstens einer Kieselsäure enthält.

Der Bodenverbund umfasst wenigstens eine Kautschukmischung und Festigkeitsträger. Die Festigkeitsträger können hierbei mit einer separaten Kautschukmischung gummiert sein oder aber auch in die den restlichen Teil des Bodenverbundes ausbildende Kautschukmischung eingebettet sein. Bei der wenigstens einen Kautschukmischung des Bodenverbundes kann es sich somit auch um die Gummierungsmischung der Festigkeitsträger handeln.

Für den Fall, dass die Festigkeitsträger mit einer separaten Kautschukmischung gummiert sind, bedeutet "der restliche Teil des Bodenverbundes" die Kautschukmischung(en), die in Kontakt mit den gummierten Festigkeitsträgern und/oder der Felge und/oder der radial nächstäußeren Schicht stehen. Es ist somit prinzipiell auch denkbar, dass der Bodenverbund wenigstens zwei Kautschukmischungen aufweist unabhängig davon, ob die Festigkeitsträger mit einer separaten Mischung gummiert sind.

Die Festigkeitsträger können jegliche dem Fachmann für Vollgummireifen bekannte Festigkeitsträger sein, s. hierzu obige Ausführungen.

Gemäß einer besonders vorteilhaften Ausführung der Erfindung weist der Vollgummireifen sowohl im Laufstreifen als auch in wenigstens einer Kautschukmischung des Bodenverbundes jeweils 1 bis 200 phr wenigstens eines Pyrolyse-Rußes auf und bevorzugt insbesondere inklusive aller oben genannten Ausführungen bezüglich der Mengen an Pyrolyse-Ruß und anderen Füllstoffen (Kieselsäure, Industrieruße).

Der erfindungsgemäße Vollgummireifen kann zwischen dem Bodenverbund und dem Laufstreifen eine Dämpferschicht aufweisen, wie z. B. in der DE 102007055036 A1 beschrieben. Die Dämpferschicht ist bevorzugt umlaufend vorgesehen und erstreckt sich bevorzugt über die gesamte axiale Breite des Vollgummireifens oder zumindest bis zu den Seitenwänden, sofern der Vollgummireifen mit Seitenwänden ausgestaltet ist.

Für den Fall, dass der Vollgummireifen Seitenwände aufweist, beträgt deren axiale Breite bevorzugt jeweils (pro Seite) maximal bis zu 15 % der gesamten axialen Breite des Vollgummireifens.

Der erfindungsgemäße Vollgummireifen kann aber auch keine solche Dämpferschicht aufweisen, sodass in einer denkbaren erfindungsgemäßen Ausführung der Laufstreifen direkt auf den Bodenverbund aufgebracht ist.

Gemäß einer vorteilhaften Ausführungsform weist der erfindungsgemäße Vollgummireifen eine Dämpferschicht zwischen dem Bodenverbund und dem Laufstreifen auf. Die Dämpferschicht unterliegt hohen Rollwiderstandsanforderungen.

Gemäß einer besonders vorteilhaften Weiterbildung der Erfindung enthält diese Dämpferschicht 10 bis 200 phr, besonders bevorzugt 30 bis 200 phr, ganz besonders bevorzugt 30 bis 150 phr, wiederum ganz besonders bevorzugt 40 bis 100 phr, wenigstens eines Pyrolyse-Rußes.

Hierbei enthält die Kautschukmischung der Dämpferschicht maximal 5 phr, besonders bevorzugt maximal 3 phr, ganz besonders bevorzugt maximal 1 phr, Industrieruß(e), und 30 bis 200 phr, besonders bevorzugt 30 bis 150 phr, wiederum ganz besonders bevorzugt 40 bis 100 phr, wenigstens eines Pyrolyse-Rußes. Der Anteil an enthaltenen Industrieruß(en) ist somit auch in der Dämpferschicht bevorzugt sehr gering. Diese maximale Obergrenze hat den Vorteil, dass der Anteil an PAK in der Kautschukmischung möglichst gering ist. Gleichzeitig kann aber herstellbedingt nicht ausgeschlossen werden, dass z. B. über die Innenwand des Mischers, in dem die Kautschukmischung gemischt wird, geringe Mengen an Industrierußen in die Mischung gelangen.

Gemäß einer besonders bevorzugten Ausführungsform der Erfindung beträgt die Menge an Industrieruß(en) jedoch 0 bis 1 phr, ganz besonders bevorzugt 0 bis 0,1 phr, wiederum bevorzugt idealerweise 0 phr. Somit ist die wenigstens eine Kautschukmischung der Dämpferschicht des Vollgummireifens bevorzugt frei von Industrierußen.

Gemäß einer besonders vorteilhaften Ausführung der Erfindung weist der Vollgummireifen sowohl im Laufstreifen als auch in wenigstens einer Kautschukmischung des Bodenverbundes als auch in der Dämpferschicht jeweils 1 bis 200 phr wenigstens eines Pyrolyse-Rußes auf und bevorzugt insbesondere inklusive aller oben genannten Ausführungen bezüglich der Mengen an Pyrolyse-Ruß und anderen Füllstoffen (Kieselsäure, Industrieruße).

Der erfindungsgemäße Vollgummireifen enthält somit in der Ausführung mit Laufstreifen, Dämpferschicht und Bodenverbund bevorzugt in allen genannten Bauteilen wenigstens einen Pyrolyse-Ruß und möglichst wenig Industrieruß (Mengen s. oben).

Ein derartiger Vollgummireifen zeigt im Vergleich zum Stand der Technik ein gleiches Rollwiderstandsverhalten und ist zudem umwelt- und gesundheitsfreundlicher ausgestaltet, insbesondere enthält er möglichst geringe Mengen an PAK-haltigen Bestandteilen.

Es ist aber auch denkbar, dass der Vollgummireifen 1 bis 200 phr Pyrolyse-Ruß inklusive aller oben genannten bevorzugten Mengen etc. nur in der Dämpferschicht aufweist.

Im Folgenden werden die Bestandteile der Kautschukmischungen der Bauteile des Vollgummireifens näher erläutert. Sofern nicht anders angegeben gelten die Ausführungen für den Laufstreifen, den Bodenverbund und die Dämpferschicht.

Der wenigstens eine Pyrolyse-Ruß wurde oben bereits ausgeführt, wobei auch ein Gemisch unterschiedlicher Pyrolyse-Ruße denkbar ist. Die angegebenen Mengen beziehen sich immer auf die Gesamtmenge an enthaltenen Pyrolyse-Rußen.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 120 bis 235 m²/g, und eine CTAB-Oberfläche (gemäß ASTM D 3765) von 30 bis 400 m²/g, bevorzugt von 50 bis 330 m²/g, besonders bevorzugt von 100 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Als Industrieruß, sofern noch in der oder den Mischungen vorhanden, kommen alle der fachkundigen Person bekannte Rußtypen in Frage.

In einer Ausführungsform hat der Ruß eine Jodzahl, gemäß ASTM D 1510, die auch als Jodadsorptionszahl bezeichnet wird, zwischen 30 g/kg und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 80 bis 200 ml/100g.

Die DBP-Zahl gemäß ASTM D 2414 bestimmt das spezifische Absorptionsvolumen eines Rußes oder eines hellen Füllstoffes mittels Dibutylphthalat.

Als weitere Füllstoffe können alle in der Kautschukindustrie denkbaren Füllstoffe vorhanden sein, wie beispielsweise Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z. B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Die weiteren Bestandteile der Kautschukmischungen umfassen bevorzugt wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bevorzugt ist der wenigstens eine Dienkautschuk ausgewählt aus der Gruppe bestehend aus synthetischem Polyisopren (IR) und natürlichem Polyisopren (NR) und Styrol-Butadien-Kautschuk (SBR) und Polybutadien (BR).

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisopren(en) denkbar.

Falls in der Kautschukmischung wenigstens ein Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Der Styrol-Butadien-Kautschuk (Styrol-Butadien-Copolymer) aus der Gruppe der weiteren Dienkautschuke ist im Rahmen der vorliegenden Anmeldung ein im Stand der Technik bekannter Styrol-Butadien-Kautschuk.

Besonderes bevorzugt handelt es sich bei dem Dienkautschuk um natürliches und/oder synthetisches Polyisopren. Ein Vollgummireifen mit wenigstens einem natürlichen und/oder synthetischen Polyisopren im Laufstreifen und/oder der Dämpferschicht und/oder dem Bodenverbund weist besonders gute Eigenschaften hinsichtlich Reißfestigkeit, Steifigkeit (nicht zu deformierbar) und zwar insbesondere im Bodenverbund zur Sicherstellung des Formschlusses zur Felge, Abrieb, Rollwiderstand auf, bei einer gleichzeitig sehr guten Prozessierbarkeit.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363^{®} von der Firma Evonik Industries vertrieben werden.

Des Weiteren kann die Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), N, N'- bis-(1,4- Dimethylpentyl)-p-Phenylenediamin (77PD)
b) Aktivatoren, wie z. B. Zinkoxid und Fettsäuren (z. B. Stearinsäure),
c) Wachse,
d) Harze, insbesondere Klebharze,
e) Mastikationshilfsmittel, wie z. B. 2,2'-Dibenzamidodiphenyldisulfid (DBD und
f) Verarbeitungshilfsmittel, wie z. B. Fettsäuresalze, wie z. B. Zinkseifen, und Fettsäureester und deren Derivate.
g) Weichmacher, wie insbesondere aromatische, naphthenische oder paraffinische Mineralölweichmacher, wie z. B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse.

Insbesondere die wenigstens eine Kautschukmischung des Bodenverbundes kann noch ein Haftsystem für die Haftung an bevorzugt metallische Festigkeitsträger vorzugsweise ein Stahlcordhaftsystem auf der Basis von organischen Cobaltsalzen und Verstärkerharzen und mehr als 2,5 phr Schwefel enthalten.

Die organischen Cobaltsalze werden üblicherweise in Mengen von 0,2 bis 2 phr eingesetzt. Als Cobaltsalze können z. B. Cobaltstearat, -borat, -borat-alkanoate, naphthenat, -rhodinat, -octoat, -adipat usw. verwendet werden. Als Verstärkerharze können Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze, beispielsweise Alnovol^{®}-Typen, eingesetzt werden. Von den Resorcin-Harzen können auch die Vorkondensate eingesetzt werden.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden. Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Die Herstellung der Kautschukmischungen des erfindungsgemäßen Vollgummireifens, die Pyrolyse-Ruß enthalten, und die Herstellung des Vollgummireifens erfolgen auf dem Fachmann bekannte Art und Weise, wobei insbesondere der Pyrolyse-Ruß wie Industrieruß eingearbeitet wird. Als geeigneter Pyrolyse-Ruß kann beispielsweise der unter dem Handelsnamen CB e 603 bekannte und erhältliche Pyrolyse-Ruß von der Fa. Pyrolyx AG verwendet werden.

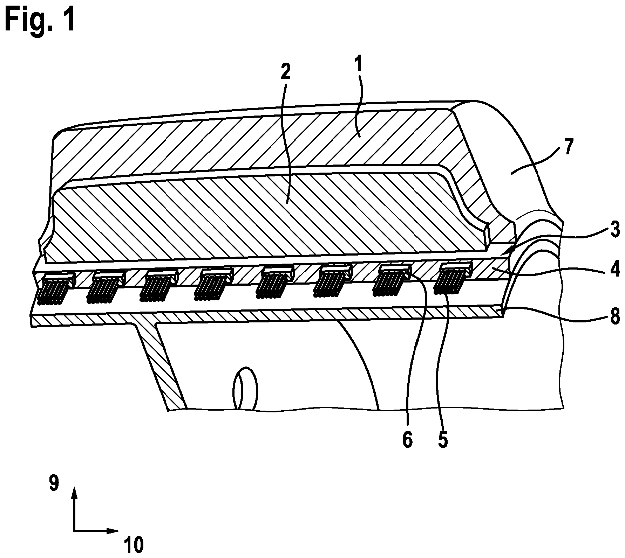

Im Folgenden soll die Erfindung anhand von Beispielen erläutert werden. Fig. 1 zeigt einen Querschnitt einer beispielhaften und bevorzugten Ausführungsform des erfindungsgemäßen Vollgummireifens.

Dieser weist einen Laufstreifen 1 aus wenigstens einer Kautschukmischung auf, der in Umlaufrichtung radial außen angeordnet ist und mit dem Untergrund in Berührung kommt. In Fig. 1 ist ein Bodenverbund 3 dargestellt, der eine Kautschukmischung 4 und Festigkeitsträger 5 umfasst. Die Festigkeitsträger 5 sind bevorzugt Stahlkordkerne. In der Ausführung gemäß Fig. 1 sind die Festigkeitsträger 5 mit einer Gummierungsmischung 6 ummantelt. Der Vollgummireifen in Fig. 1 weist eine Dämpferschicht 2 aus einer Kautschukmischung auf.

In Fig. 1 ist ferner eine Seitenwand 7 aus einer Kautschukmischung dargestellt, die die Dämpferschicht 2 in axialer Breite begrenzt, wobei es sich bei der Kautschukmischung der Seitenwand 7 um die gleiche Mischung wie die des Laufstreifens 1 handeln kann.

Der Reifen in Fig. 1 ist auf einer Felge 8 aufgebracht. Somit zeigt Fig. 1 ebenfalls ein Beispiel eines erfindungsgemäßen Rades.

Der in Fig. 1 gezeigte Vollgummireifen weist bevorzugt und beispielsweise sowohl in der Laufstreifenmischung 1, als auch in der Kautschukmischung der Dämpferschicht 2 als auch in der Kautschukmischung 4 des Bodenverbundes 3 jeweils 1 bis 200 phr Pyrolyse-Ruß auf.

### Beispielsweise enthält die Kautschukmischung des Laufstreifens 1

100 phr Naturkautschuk, 4 phr Pyrolyse-Ruß, 0 phr Industrieruß, 50 phr Kieselsäure sowie übliche Zusatzstoffe wie Alterungsschutzmittel, Zinkoxid, Stearinsäure, Silan-Kupplungsagens und Prozesshilfsmittel sowie ein Schwefelvulkanisationssystem aus Schwefel und Sulfenamidbeschleuniger in üblichen Mengen.

Die Kautschukmischung des Laufstreifens 1 weist somit keinen Industrieruß auf und ist damit frei von PAK bei gleichzeitig sehr guten Abrieb-, Griff- und Rollwiderstandseigenschaften.

### Beispielsweise enthält die Kautschukmischung der Dämpferschicht 2

50 phr Naturkautschuk, 50 phr synthetisches Polyisopren, 50 phr Pyrolyse-Ruß, 0 phr Industrieruß sowie übliche Zusatzstoffe wie Alterungsschutzmittel, Zinkoxid, Stearinsäure, sowie ein Schwefelvulkanisationssystem aus Schwefel und Sulfenamidbeschleuniger in üblichen Mengen.

Die Kautschukmischung der Dämpferschicht 2 weist somit keinen Industrieruß auf und ist damit frei von PAK bei gleichzeitig sehr guten Rollwiderstandseigenschaften.

Beispielsweise enthält die Kautschukmischung 4 des Bodenverbundes 3 100 phr Naturkautschuk, 50 phr Pyrolyse-Ruß in Kombination mit 45 phr Industrieruß N 339 (anstelle von 95 phr Industrieruß) sowie übliche Zusatzstoffe wie ein Haftsystem für Stahlcorde als metallische Festigkeitsträger, Alterungsschutzmittel, Zinkoxid, Stearinsäure und Prozesshilfsmittel sowie ein Schwefelvulkanisationssystem aus Schwefel und Sulfenamidbeschleuniger in üblichen Mengen.

Es hat sich gezeigt, dass ein Großteil des bisher enthaltenen Industrierußes durch Pyrolyseruß ersetzt werden kann, ohne dass sich die Eigenschaften des Vollgummireifens verschlechtern.

Die Kautschukmischung 4 des Bodenverbundes 3 weist somit vergleichsweise wenig Industrieruß und somit möglichst wenig PAK auf bei gleichzeitig sehr guten Rollwiderstandseigenschaften.

Der beispielhaft beschriebene Vollgummireifen weist somit in allen großvolumigen Bauteilen Pyrolyse-Ruß anstelle von Industrieruß auf und ist damit vergleichsweise umwelt- und gesundheitsfreundlich aufgrund der geringen PAK-Gehalte.

### Bezugszeichenliste

- 1: Laufstreifen
- 2: Dämpferschicht
- 3: Bodenverbund
- 4: Kautschukmischung des Bodenverbundes
- 5: Festigkeitsträger des Bodenverbundes
- 6: Gummierungsmischung der Festigkeitsträger
- 7: Seitenwand
- 8: Felge
- 9: Radiale Richtung
- 10: Axiale Richtung

## Patentansprüche

1. Vollgummireifen, **dadurch gekennzeichnet, dass** er in wenigstens einem Bauteil 1 bis 200 phr wenigstens eines Pyrolyse-Rußes aufweist, wobei der Vollgummireifen wenigstens einen Laufstreifen umfasst, und wobei der Pyrolyse-Ruß einen Aschegehalt von 5 bis 30 Gew.-% aufweist

2. Vollgummireifen nach Anspruch 1, **dadurch gekennzeichnet, dass** der Pyrolyse-Ruß einen Schwefelgehalt von größer als 1 Gew.-% aufweist.

3. Vollgummireifen nach einem der vorherigen Ansprüche, **dadurch gekennzeichnet, dass** er 1 bis 40 phr wenigstens eines Pyrolyse-Rußes in der Kautschukmischung des Laufstreifens enthält.

4. Vollgummireifen nach Anspruch 3, **dadurch gekennzeichnet, dass** die Kautschukmischung des Laufstreifens maximal 5 phr Industrieruß(e) und 1 bis 200 phr wenigstens einer Kieselsäure enthält.

5. Vollgummireifen nach einem der vorherigen Ansprüche, **dadurch gekennzeichnet, dass** er einen Bodenverbund umfassend wenigstens eine Kautschukmischung und Festigkeitsträger aufweist und in wenigstens einer Kautschukmischung des Bodenverbundes 20 bis 200 phr wenigstens eines Pyrolyse-Rußes enthält.

6. Vollgummireifen nach Anspruch 5, **dadurch gekennzeichnet, dass** die wenigstens eine Kautschukmischung des Bodenverbundes maximal bis zu 60 phr wenigstens eines Industrierußes enthält.

7. Vollgummireifen nach einem der Ansprüche 5 oder 6, **dadurch gekennzeichnet, dass** er eine Dämpferschicht zwischen dem Bodenverbund und dem Laufstreifen aufweist und diese 10 bis 200 phr wenigstens eines Pyrolyse-Rußes enthält.

8. Vollgummireifen nach Anspruch 7, **dadurch gekennzeichnet, dass** die Kautschukmischung der Dämpferschicht maximal 5 phr Industrieruß(e) und 30 bis 200 phr wenigstens eines Pyrolyse-Rußes enthält.

9. Vollgummireifen nach einem der vorherigen Ansprüche, **dadurch gekennzeichnet, dass** er sowohl im Laufstreifen als auch in wenigstens einer Kautschukmischung des Bodenverbundes als auch in der Dämpferschicht jeweils 1 bis 200 phr wenigstens eines Pyrolyse-Rußes aufweist.

10. Rad, **dadurch gekennzeichnet, dass** es eine Felge und einen Vollgummireifen nach einem der Ansprüche 1 bis 9 umfasst.

11. Rolle, **dadurch gekennzeichnet, dass** sie eine Felge oder einen Grundkörper mit Kugellager und einen Vollgummireifen nach einem der Ansprüche 1 bis 9 umfasst.

## Claims

1. Solid rubber tyre, **characterized in that** it comprises in at least one component 1 to 200 phr of at least one pyrolysis carbon black, wherein the solid rubber tyre comprises at least one tread and wherein the pyrolysis carbon black has an ash content of 5% to 30% by weight.

2. Solid rubber tyre according to Claim 1, **characterized in that** the pyrolysis carbon black has a sulfur content of greater than 1% by weight.

3. Solid rubber tyre according to either of the preceding claims, **characterized in that** it contains 1 to 40 phr of at least one pyrolysis carbon black in the rubber mixture of the tread.

4. Solid rubber tyre according to Claim 3, **characterized in that** the rubber mixture of the tread contains at most 5 phr of industrial carbon black(s) and 1 to 200 phr of at least one silica.

5. Solid rubber tyre according to any of the preceding claims, **characterized in that** it comprises a base composite comprising at least one rubber mixture and strength members and in at least one rubber mixture of the base composite contains 20 to 200 phr of at least one pyrolysis carbon black.

6. Solid rubber tyre according to Claim 5, **characterized in that** the at least one rubber mixture of the base composite contains at most up to 60 phr of at least one industrial carbon black.

7. Solid rubber tyre according to either of Claims 5 or 6, **characterized in that** it comprises a damper layer between the base composite and the tread and said layer contains 10 to 200 phr of at least one pyrolysis carbon black.

8. Solid rubber tyre according to Claim 7, **characterized in that** the rubber mixture of the damper layer contains at most 5 phr of industrial carbon black(s) and 30 to 200 phr of at least one pyrolysis carbon black.

9. Solid rubber tyre according to any of the preceding claims, **characterized in that** it comprises in each case 1 to 200 phr of at least one pyrolysis carbon black in the tread, in at least one rubber mixture of the base composite and in the damper layer.

10. Wheel, **characterized in that** it comprises a rim and a solid rubber tyre according to any of Claims 1 to 9.

11. Roller, **characterized in that** it comprises a rim or a main body having a ball bearing and a solid rubber tyre according to any of Claims 1 to 9.

## Revendications

1. Bandage en caoutchouc plein, **caractérisé en ce qu'**il comprend dans au moins un composant 1 à 200 phr d'au moins un noir de carbone de pyrolyse, le bandage en caoutchouc plein comprenant au moins une bande de roulement, et le noir de carbone de pyrolyse présentant une teneur en cendres de 5 à 30 % en poids.

2. Bandage en caoutchouc plein selon la revendication 1, **caractérisé en ce que** le noir de carbone de pyrolyse présente une teneur en soufre supérieure à 1 % en poids.

3. Bandage en caoutchouc plein selon l'une des revendications précédentes, **caractérisé en ce qu'**il contient 1 à 40 phr d'au moins un noir de carbone de pyrolyse dans le mélange de caoutchouc de la bande de roulement.

4. Bandage en caoutchouc plein selon la revendication 3, **caractérisé en ce que** le mélange de caoutchouc de la bande de roulement contient au maximum 5 phr d'un ou plusieurs noirs de carbone industriels et 1 à 200 phr d'au moins une silice.

5. Bandage en caoutchouc plein selon l'une des revendications précédentes, **caractérisé en ce qu'**il comprend une couche de base comprenant au moins un mélange de caoutchouc et des éléments de renforcement et, dans au moins un mélange de caoutchouc de la couche de base, contient 20 à 200 phr d'au moins un noir de carbone de pyrolyse.

6. Bandage en caoutchouc plein selon la revendication 5, **caractérisé en ce que** l'au moins un mélange de caoutchouc de la couche de base contient au maximum jusqu'à 60 phr d'au moins un noir de carbone industriel.

7. Bandage en caoutchouc plein selon l'une des revendications 5 ou 6, **caractérisé en ce qu'**il comprend une couche d'amortissement entre la couche de base et la bande de roulement, la couche d'amortissement contenant 10 à 200 phr d'au moins un noir de carbone de pyrolyse.

8. Bandage en caoutchouc plein selon la revendication 7, **caractérisé en ce que** le mélange de caoutchouc de la couche d'amortissement contient au maximum 5 phr d'un ou plusieurs noirs de carbone industriels et 30 à 200 phr d'au moins un noir de carbone de pyrolyse.

9. Bandage en caoutchouc plein selon l'une des revendications précédentes, **caractérisé en ce qu'**il comprend 1 à 200 phr d'au moins un noir de carbone de pyrolyse tant dans la bande de roulement que dans au moins un mélange de caoutchouc de la couche de base et que dans la couche d'amortissement.

10. Roue, **caractérisée en ce qu'**elle comprend une jante et un bandage en caoutchouc plein selon l'une des revendications 1 à 9.

11. Galet, **caractérisé en ce qu'**il comprend une jante ou un corps de base avec roulement à billes et un bandage en caoutchouc plein selon l'une des revendications 1 à 9.
